# EUROPÄISCHE PATENTSCHRIFT

(11) **EP 1 754 001 B1**
(45) Veröffentlichungstag und Bekanntmachung des Hinweises auf die Patenterteilung: **27.12.2017**
(21) Anmeldenummer: 05716888.2
(22) Anmeldetag: 02.03.2005
(51) Int. Cl.: F23Q 7/00, F02P 19/02, F02D 35/02, G01L 19/06, G01L 23/22

(54) **GLÜHSTIFTKERZE MIT EINEM GASKANAL ZUR BRENNRAUMDRUCKMESSUNG**
GLOW PLUG WITH A GAS CHANNEL FOR COMBUSTION PRESSURE MEASUREMENT
BOUGIE DE PRECHAUFFAGE POURVUE D'UN CANAL A GAZ PERMETTANT DE MESURER LA PRESSION DU COMBUSTION

(30) Priorität: 27.05.2004 DE 102004025968
(43) Veröffentlichungstag der Anmeldung: 21.02.2007
(73) Patentinhaber: Robert Bosch GmbH, 70442 Stuttgart (DE)
(72) Erfinder: KERN, Christoph, 71546 Aspach (DE); SCHOTT, Steffen, 71701 Schwieberdingen (DE); BECK, Michel, F-12330 Valady (FR)
(86) Internationale Anmeldenummer: PCT/EP2005/050930
(87) Internationale Veröffentlichungsnummer: WO 2005/116528

(56) Entgegenhaltungen:
- EP-A- 1 096 141
- WO-A-97/09567
- DE-A1- 4 132 842
- DE-A1- 10 332 960
- DE-U1- 20 020 411

## Beschreibung

Die Erfindung bezieht sich auf eine Glühstiftkerze für eine Brennstoffkraftmaschine, bestehend im wesentlichen aus einem Kerzengehäuse und einem in dem Kerzengehäuse angeordneten Glühstift, mit einem Gaskanal zur Messung des Brennraumdrucks.

### Stand der Technik

Dieselmotoren benötigen für ein gutes Start- und Warmlaufverhalten bei tiefen Temperaturen eine Wärmequelle, die entweder das Gasgemisch, die Ansaugluft oder den Brennraum vorwärmen. Für PKW-Motoren wird in der Regel die Verwendung von Glühstiftkerzen vorgeschlagen. Diese bestehen aus einem Kerzengehäuse und einem aus dem Kerzengehäuse ragenden Glühstift, der in seinem montierten Zustand aus dem Zylinderkopf in den Brennraum einer Brennstoffkraftmaschine hineinragt. In der Regel ragen die Glühstifte der Glühstiftkerzen um 4 mm in den Brennraum der Brennstoffkraftmaschine und erwärmen das Diesel-Luft-Gemisch. Erreichte Glühtemperatur und Nachglühzeit der Glühstiftkerze haben dabei einen erheblichen Einfluss auf das Abgasverhalten und den Kraftstoffverbrauch der Brennstoffkraftmaschine.

Bei den Glühstiften kann es sich um metallische Heizrohre oder um keramische Glühstifte handeln.

Um die vorgegebenen Ziele, weiter Kraftstoff einzusparen und Emissionen zu senken, zu erreichen, besteht ein zunehmendes Interesse darin, kostengünstige Sensoren zu entwickeln, die Informationen über den Verbrennungsverlauf direkt aus dem Brennraum des Motors liefern können. Aus diesen Informationen könnte z.B. die Einspritzmengenregelung vorgenommen werden. Die Verfolgung des Druckes innerhalb des Brennraums hätte wesentliche Vorteile beispielsweise gegenüber der Ionenstrommessung, die lediglich eine lokale Information liefert, da die Druckmesswerte bzw. deren Änderungen grösser und daher einfacher erfassbar sind.

Sensorintegrative Konzepte, bei denen ein Drucksensor an oder in der Glühstiftkerze angeordnet sind, haben den Vorteil, dass kein zusätzliches Bohrloch in der Brennstoffkraftmaschine vorgesehen sein muss. Dieser Vorteil vergrössert sich um so mehr, da bei modernen Brennstoffkraftmaschinen der Bauraum zum Anbringen von zusätzlichen Sensoren sehr eingeschränkt ist.

Aus dem Stand der Technik werden Lösungen vorgeschlagen, die ein piezoelektrisches Element zwischen dem Gehäuse und der Verschraubung am Zylinder einer Glühstiftkerze vorsehen, so beispielsweise aus der EP-A 109 6141 bekannt. Des weiteren wir in der Druckschrift WO-A 97 09567 ein zusätzlicher Drucksensor in der Glühstiftkerze vorgeschlagen, der zwischen einem Fixierungsglied und einem Zylinderdruckaufnahmeglied in einem Körper einer Glühstiftkerze zwischengeschaltet ist.

Zur Druckmessung können piezoresistive Sensoren, wie MDS- oder SOI-Sensoren, piezoelektrischen Sensoren, wie GaPO₄-Quar-oder Langasite-Sensoren oder optische Sensoren eingesetzt werden.

Der Druck kann über eine Materialverschiebung oder -längung, die bei integrierten Sensoren über die Glühstiftkerze übertragen wird, auf den Sensor geleitet werden.

Eine weitere Möglichkeit der Druckübertragung besteht in einen Gaskanal, der bei integrierten Sensoren zunächst im Spalt zwischen Glühstift und Zylinderkopfbohrung und anschließend innerhalb der Glühstiftkerze verläuft. In diesem Gaskanal wird der Brennraumdruck mittels einer Luftsäule bis zum motorraumseitigen Brennraumdrucksensor weitergeleitet.

Glühstiftkerzen mit integriertem Drucksensor, die auf dem Übertragungsprinzip des Brennraumdrucks mittels einer Gassäule beruhen, können empfindlich gegenüber Verkokung sein, da eindringende und sich ansammelnde Partikel die Messung beeinflussen können.

DE 200 20 411 U1 hat eine Vorrichtung zur Erhöhung der Messgenauigkeit und der Standzeit bei Drucksensoren zur Messung von Verbrennungsdrücken bei Kolbenmaschinen zum Gegenstand. Die Druck- bzw. Flammensäule wirkt nicht direkt, sondern ein amorphes metallisches Filterelement auf die Messmembran, die Messzelle oder dergleichen ein. Die Vorrichtung dient zur Erhöhung der Messgenauigkeit und der Standzeit bei Drucksensoren zur Messung von Verbrennungsdrücken bei Kolbenmaschinen.

DE 41 32 842 A1 beschreibt eine Glühkerze mit Heizstab, der außenmittig in eine Bohrung eines Glühkerzenkörpers eingepresst ist, wobei in dem Körper parallel zur Heizstabachse eine Bohrung für einen Sensor ausgebildet ist.

### Aufgabe der Erfindung

Die Aufgabe der Erfindung besteht darin, eine Glühstiftkerze vorzustellen, bei der das Eindringen von Verkokungs- oder Verbrennungsrückständen in das Innere der Glühstiftkerze verhindert oder zumindest auf ein tolerierbares Maß reduziert wird.

### Lösung der Aufgabe

Die Aufgabe wird gelöst, indem in dem Gaskanal ein gasdurchlässiges Filterelement vorgesehen ist.

### Vorteile der Erfindung

Das Filterelement versperrt den neben oder innerhalb der Glühstiftkerze verlaufenden Gaskanal, sodass Verkokungs- oder Verbrennungsrückstände nicht an den besonders empfindlichen Drucksensor gelangen können.

Ist das Filterelement in das brennraumseitige Ende des Gaskanals eingepasst, so wird auch das Eindringen von Verkokungs- oder Verbrennungsrückständen in den Gaskanal verhindert oder zumindest reduziert. Damit wird einer durch sich einlagernde Partikel möglichen Querschnittsverengung entgegen gewirkt und ein Zusetzen des Gaskanals verhindert.

Gleichzeitig bleibt durch die Gasdurchlässigkeit des Filterelements die Luftsäule zur Feststellung der Druckverhältnisse im Brennraum unbeeinflusst.

Die Druckmessung kann systemgenau durchgeführt werden, da die Querschnittsfläche des Gaskanals sich nicht zusetzen kann und somit konstant bleibt, und somit auch keine Partikel auf die empfindliche Membran des Drucksensors gelangen können. Befinden sich am Drucksensor bewegliche Teile, so wird auch deren Behinderung durch einen möglichen Partikeleintrag durch den Einsatz des Filterelements vermieden. Der Gaskanal einer Glühstiftkerze setzt sich aus zwei Teilabschnitten zusammen, aus einem ersten Kanal, der durch den lichten Raum zwischen Glühstift und Zylinderkopfbohrung gebildet wird und einem zweiten Kanal, der sich in einem Bereich zwischen Glühstift und Kerzengehäuse befindet.

Das Filterelement kann im ersten Kanal und oder im zweiten Kanal angeordnet sein.

Bevorzugt befindet sich das Filterelement in einem Bereich der Glühstiftkerze, der entweder hinreichend heiß oder hinreichend erhitzbar ist, damit Verkokungsrückstände in dem Filterelement abgeschieden oder verbrannt werden. Dazu wird das Filterelement in unmittelbare Nähe zum Glühstift gebracht und bildet vorzugsweise eine stoff- oder zumindest formschlüssige Verbindung mit dem Glühstift. Diese kann z.B. durch Einlegen, Einpressen oder Anstecken hergestellt werden. Das Filterelement ist mit einem Dichtelement verbunden, das für eine Abdichtung zwischen dem Kerzengehäuse und dem Dichtsitz in der Zylinderkopfbohrung sorgt. Filterelement und Dichtelement können entweder einteilig aus einem für beide Belange geeigneten Material gefertigt sein oder zweiteilig ausgeführt sein, wobei die beiden Teile aneinander fixiert sind.

Für die Kombination zwischen Filterelement und Dichtelement wird das Filterelement vorzugsweise in den Gaskanal in die Nähe des Übergangs zwischen erstem und zweiten Kanal angebracht, da genau am Übergang zwischen erstem und zweiten Kanal der Dichtsitz zwischen Zylinderkopf und Kerzengehäuse ansetzt. Dichtelement und Filterelement befinden sich in diesem Fall räumlich nah beieinander.

Für das Material des Filterelements kommt unter anderem ein engmaschiges Gewebe, wie Vließ aus Metall, poröse Keramik oder ein Metall mit kleinsten Bohrungen in Frage.

Weitere vorteilhafte Ausgestaltungen gehen aus der nachfolgenden Beschreibung sowie den Ansprüchen hervor.

### Zeichnungen

Es zeigen:
- Figur 1: eine schematische vergrößerte Teildarstellung eines ersten Beispiels einer Glühstiftkerze im Schnitt;
- Figur 2: eine schematische vergrößerte Teildarstellung eines zweiten Beispiels einer Glühstiftkerze im Schnitt;
- Figur 3: eine schematische vergrößerte Teildarstellung eines dritten Beispiels einer Glühstiftkerze im Schnitt;
- Figur 4: eine schematische vergrößerte Teildarstellung eines Beispiels einer erfindungsgemässen Glühstiftkerze im Schnitt;

### Beschreibung der Ausführungsbeispiele

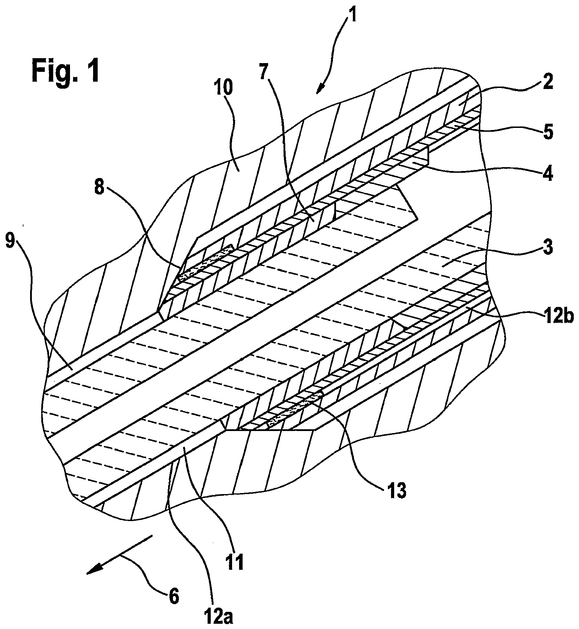

In Figur 1 ist eine schematische Darstellung eines ersten Ausführungsbeispiels einer Glühstiftkerze 1 im Schnitt gezeigt. Die Glühstiftkerze 1 besitzt ein Kerzengehäuse 2 und einen keramischen Glühstift 3. Dieser ist über ein Kontaktelement 4 mit einem Stützrohr 5 verbunden, welches eine elektrische Verbindung zu dem Kerzengehäuse 2 herstellt. Auf der Brennraumseite 6 des Kontaktelements 4 ist ebenfalls ein Kontakt mit dem Glühstift 3 eine Fixierhülse 7 vorgesehen.

Die Umhüllung des Glühstifts 3, bestehend aus Fixierhülse 7, Stützrohr 5 und Kerzengehäuse 2 besitzt auf der Brennraumseite 6 einen konisch geformten Abschluss 8, mit dem sie sich dichtend an die Bohrung 9 im Zylinderkopf 10 presst.

Zur Weiterleitung des Drucks in dem in der Figur nicht dargestellten Brennraum zu dem in der Figur ebenfalls nicht dargestelltem Drucksensor weist die Glühstiftkerze 1 einen Gaskanal 11 auf, der sich aus zwei Teilbereichen zusammensetzt, einem ersten Kanal 12a, der sich zwischen Zylinderkopf 10 und Glühstift 3 befindet und einem zweiten Kanal 12b, der zwischen Stützrohr 5 und Kerzengehäuse 2 verläuft.

In dem zweiten Kanal 12b befindet sich brennraumseitig 6 ein Filterelement 13. Dieses hält Verbrennungs- und Verkokungsrückstände, die im in der Figur nicht dargestellten Brennraum entstehen davon ab, in den zweiten Kanal 12b zu dringen und bis zu dem ebenfalls nicht dargestellten Drucksensor zu gelangen. Das Filterelement 13 kann bei der Fertigung der Glühstiftkerze 1 montiert werden.

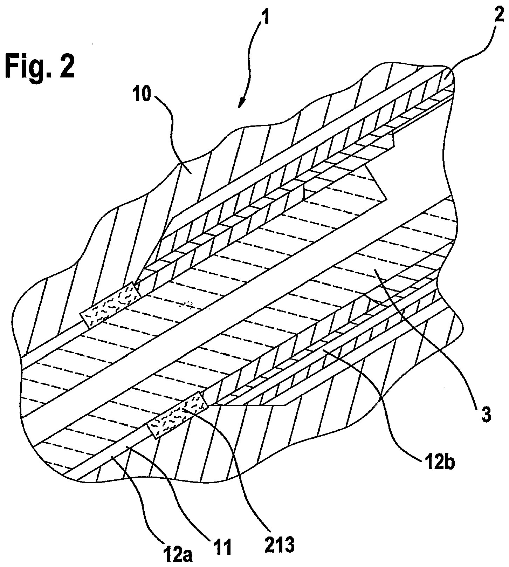

In Figur 2 eine ist schematische Darstellung eines zweiten Ausführungsbeispiels einer Glühstiftkerze 1 im Schnitt gezeigt. Die Glühstiftkerze 1 besitzt im wesentlichen den gleichen Aufbau wie im vorherigen Beispiel, sie weist ein Kerzengehäuse 2, einen keramischen Glühstift 3 und einen zweistückigen Gaskanal 11, bestehend aus einem ersten Kanal 12a und einem zweiten Kanal 12b, auf.

In diesem Ausführungsbeispiel befindet sich ein Filterelement 213 in dem ersten Kanal 12a. Das Filterelement 213 kann bei der Montage der Glühstiftkerze 1 zwischen Zylinderkopf 10 und Glühstift 3 gesetzt werden.

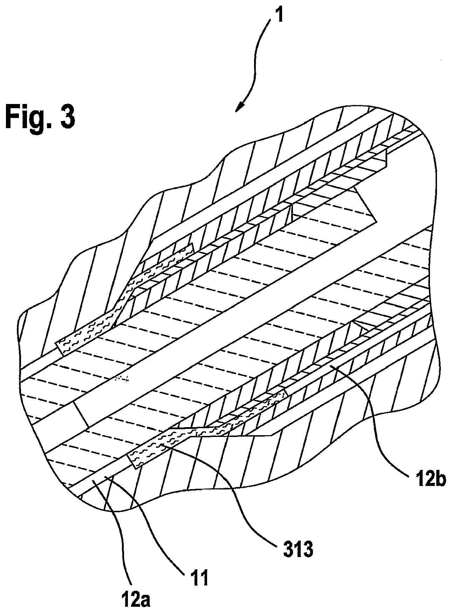

In Figur 3 ist eine schematische Darstellung eines dritten Ausführungsbeispiels einer Glühstiftkerze 1 im Schnitt gezeigt. Dieses Ausführungsbeispiel zeigt ein Filterelement 313, das eine Kombination der ersten beiden Ausführungsbeispiele darstellt.

Das Filterelement 313 befindet sich sowohl im ersten Kanal 12a, als auch im zweiten Kanal 12b und schließt somit die Verbindung der beiden Gaskanäle 12a,12b gegenüber Partikeln ab.

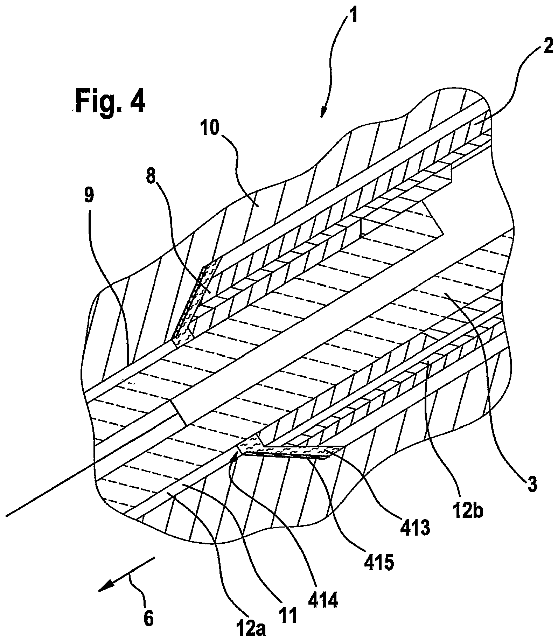

In Figur 4 ist eine schematische Darstellung einer erfindungsgemäßen Glühstiftkerze 1 im Schnitt gezeigt. Die Glühstiftkerze 1 besitzt im wesentlichen den gleichen Aufbau wie in den vorherigen Beispielen. Sie weist ein Kerzengehäuse 2, einen keramischen Glühstift 3 und einen zweistückigen Gaskanal 11, bestehend aus einem ersten Kanal 12a und einem zweiten Kanal 12b, auf.

Ein Filterelement 413 bedeckt das von der Brennraumseite 6 wegweisende Ende 414 des ersten Kanals 12a und ist verbunden mit einem Dichtelement 415. Dieses passt sich zwischen den konisch geformten Abschluss 8 der Glühstiftkerze 1 und der Bohrung 9 im Zylinderkopf 10 und sorgt damit für eine Abdichtung des Brennraumdrucks gegenüber der weiteren Umgebung.

Filterelement 413 und Dichtelement 415 können einteilig aus einem Material gefertigt sein, das sich sowohl für Filter- als auch für Dichtzwecke eignet. Das Dichtelement 415 kann auch aus einem speziell für Dichtzwecke ausgelegtem Material, z.B. als Kupferscheibe, hergestellt sein und daran wird ein weiteres Bauteil mit Filterfunktion fixiert. Bei der Montage wird das Dichtelement 415 zwischen Zylinderkopf 10 und Glühstiftkerze 1 gepresst.

Das Filterelement 413 kann auch, anders als in der Figur dargestellt, wie in den Beispielen 1 bis 4 in den ersten und oder zweiten Kanal 12a, 12b hineinragen.

## Patentansprüche

1. Glühstiftkerze für eine Brennstoffkraftmaschine, bestehend im wesentlichen aus einem Kerzengehäuse und einem in dem Kerzengehäuse angeordneten Glühstift, mit einem Gaskanal zur Messung des Brennraumdrucks, **dadurch gekennzeichnet, dass** in dem Gaskanal (11) ein gasdurchlässiges Filterelement (414) vorgesehen ist, welches mit einem Dichtelement (415) verbunden ist, das für eine Abdichtung zwischen dem Kerzengehäuse (2) und dem Dichtsitz in der Zylinderkopfbohrung (9) sorgt, und sich der Gaskanal (11) zusammensetzt aus einem ersten Kanal (12a), der durch den lichten Raum zwischen Glühstift (3) und Zylinderkopfbohrung (9) gebildet ist und einem zweiten Kanal (12b) der sich in einem Bereich zwischen Glühstift (3) und Kerzengehäuse (2) befindet.

2. Glühstiftkerze gemäß Anspruch 1, **dadurch gekennzeichnet, dass** das Filterelement (414) in dem ersten Kanal (12a) angeordnet ist.

3. Glühstiftkerze gemäß Anspruch 1 oder 2, **dadurch gekennzeichnet, dass** das Filterelement (414) in dem zweiten Kanal (12b) angeordnet ist.

4. Glühstiftkerze gemäß einem der Ansprüche 1, 2 oder 3, **dadurch gekennzeichnet, dass** das Filterelement (414) aus einem engmaschigen Gewebe, aus poröser Keramik oder einem Metall mit kleinsten Bohrungen besteht.

## Claims

1. Sheathed-element heater plug for a fuel-powered engine, composed substantially of a plug housing and of a heater element arranged in the plug housing, having a gas duct for the measurement of the combustion chamber pressure, **characterized in that** a gas-permeable filter element (414) is provided in the gas duct (11), which filter element is connected to a sealing element (415) which ensures a seal between the plug housing (2) and the sealing seat in the cylinder head bore (9), and the gas duct (11) is made up of a first duct (12a), which is formed by the clear space between heater element (3) and cylinder head bore (9), and of a second duct (12b), which is situated in a region between heater element (3) and plug housing (2).

2. Sheathed-element heater plug according to Claim 1, **characterized in that** the filter element (414) is arranged in the first duct (12a).

3. Sheathed-element heater plug according to Claim 1 or 2, **characterized in that** the filter element (414) is arranged in the second duct (12b).

4. Sheathed-element heater plug according to one of Claims 1, 2 or 3, **characterized in that** the filter element (414) is composed of a fine-mesh fabric, of porous ceramic or of a metal with extremely small bores.

## Revendications

1. Bougie de préchauffage pour un moteur à combustion interne, constituée essentiellement d'un boîtier de bougie et d'un crayon de préchauffage disposé dans le boîtier de bougie, comprenant un canal de gaz pour mesurer la pression dans la chambre de combustion, **caractérisée en ce qu'**un élément de filtre (414) perméable aux gaz est prévu dans le canal de gaz (11), lequel est connecté à un élément d'étanchéité (415) qui assure l'étanchéité entre le boîtier de bougie (2) et le siège d'étanchéité dans l'alésage de culasse (9), et le canal de gaz (11) étant constitué d'un premier canal (12a) qui est formé par l'espace intérieur entre le crayon de préchauffage (3) et l'alésage de culasse (9) et un deuxième canal (12b) qui se trouve dans une région entre le crayon de préchauffage (3) et le boîtier de bougie (2).

2. Bougie de préchauffage selon la revendication 1, **caractérisée en ce que** l'élément de filtre (414) est disposé dans le premier canal (12a).

3. Bougie de préchauffage selon la revendication 1 ou 2, **caractérisée en ce que** l'élément de filtre (414) est disposé dans le deuxième canal (12b).

4. Bougie de préchauffage selon l'une quelconque des revendications 1, 2 3, **caractérisée en ce que** l'élément de filtre (414) se compose d'un tissu à mailles étroites, de céramique poreuse ou d'un métal ayant de très petits trous.
